Europäisches Patentamt

European Patent Office

Office européen des brevets

(19)

(11) Veröffentlichungsnummer: **0 212 643 B1**

# (12) EUROPÄISCHE PATENTSCHRIFT

(45) Veröffentlichungstag der Patentschrift: **14.08.91**

(51) Int. Cl.⁵: **H02G 7/05**

(21) Anmeldenummer: **86111649.9**

(22) Anmeldetag: **22.08.86**

(54) Seilabspannklemme.

(30) Priorität: **26.08.85 CH 3661/85
26.08.85 CH 3662/85**

(43) Veröffentlichungstag der Anmeldung:
**04.03.87 Patentblatt 87/10**

(45) Bekanntmachung des Hinweises auf die
Patenterteilung:
**14.08.91 Patentblatt 91/33**

(84) Benannte Vertragsstaaten:
**AT CH DE GB IT LI NL SE**

(56) Entgegenhaltungen:
**EP-A- 0 132 208
CH-A- 551 707
DE-B- 1 105 021
FR-A- 1 498 867**

(73) Patentinhaber: **GEORG FISCHER AKTIENGE-
SELLSCHAFT
Mühlentalstrasse 105
CH-8201 Schaffhausen(CH)**

(72) Erfinder: **Messerli, Fritz
Wassergasse 106
CH-8211 Stetten(CH)**
Erfinder: **Schmid, Edmund
Stimmerstrasse 100
CH-8200 Schaffhausen(CH)**

## Beschreibung

Die Erfindung betrifft je eine Seilabspannklemme, wie sie im Oberbegriff von Anspruch 1 und von Anspruch 2 gekennzeichnet ist.

Eine dem Oberbegriff von Anspruch 1 entsprechende Seilabspannklemme ist durch die DE-C3-24 15 480 bekannt geworden und eine dem Oberbegriff von Anspruch 2 entsprechende Seilabspannklemme ist durch die DE-C3-11 05 021 bekannt geworden, wobei diese Einrichtungen zum Abspannen von jeweils nur einem Leiterseil geeignet sind.

Bei modernen Freileitungen zur Uebertragung elektrischer Energie bestehen die Leiterseile aus zwei oder mehreren verdrillten Einzel-Leiterseilen, wodurch das Galopping bei Hochspannungsleitungen verhindert werden soll. Für das Abspannen derartiger Leiterseile sind die oben genannten Seilabspannklemmen jedoch nicht geeignet.

Durch die EP-A-0132208 ist eine Seilabspannklemme für vier Leiterseile bekanntgeworden, welche in einem U-förmigen Klemmkörper zwischen zwei Keilen ein zwischenteil aufweist. Zwischenteil und Keile weisen übereinander angeordnete Ausnehmungen zur Aufnahme von vier Leiterseilen auf. Nachteilig ist, dass bei unterschiedlichen Leiterseildurchmessern und/oder durch ein axiales Verschieben des Zwischenteiles gegenüber den Keilen keine gleichmässige Klemmung aller Leiterseile gewähleistet ist.

Aufgabe der vorliegenden Erfindung ist die Schaffung von Seilabspannklemmen der eingangs genannten Arten, mittels welchen die aus zwei oder mehreren Einzel-Leiterseilen bestehenden Freileitungsseile abgespannt werden können, wobei eine gleichmässige Klemmung bei allen Leiterseilen gewährleistet sein soll.

Erfindungsgemäss wird dies durch die kennzeichnenden Merkmale von Anspruch 1 und Anspruch 2 gelöst.

Besonders vorteilhafte Ausführungsformen der Erfindung gemäss der Ansprüche 1 bzw.2 sind in den abhängigen Ansprüchen gekennzeichnet.

Durch die in Anspruch 1 gekennzeichnete Anordnung mindestens eines in axialer Richtung mit den Heilen gehaltenen Zwischenteiles ist die Seilabspannklemme mit Heilen für die Verwendung bei mindestens aus zwei miteinander verdrillten Leiterseilen bestehenden Leitern für elektrische Freileitungen geeignet, wodurch auch eine gleichmässige Klemmung der in der Seilabspannklemme nebeneinander angeordneten Einzel-Seilleiter gewähleistet ist.

Durch die in Anspruch 2 gekennzeichneten nebeneinander angeordneten Ausnehmungen in der Trennebene der Klemmhülse ist die Seilabspannklemme mit der konischen Hülse für die Verwendung von aus zwei oder mehreren miteinander verdrillten Leiterseilen bestehenden Leitern für elektrische Freileitungen verwendbar, wodurch auch eine gleichmässige Klemmung der Einzel-Seilleiter gewährleistet ist.

In den Zeichnungen sind Ausführungsbeispiele von Abspannklemmen gemäss der Erfindung dargestellt.

Es zeigen:

Fig. 1    eine Ansicht der Abspannklemme,

Fig. 2    eine Draufsicht von Fig. 1

Fig. 3    einen Schnitt entlang der Linie III-III von Fig. 1,

Fig. 4    eine Ansicht einer zweiten Ausführungsvariante einer Abspannklemme,

Fig. 5    eine Draufsicht von Fig. 4,

Fig. 6    einen Schnitt entlang der Linie VI-VI von Fig. 4 in vergrösserter Darstellung und

Fig. 7    einen Schnitt entsprechend Fig. 6 mit einer zur Horizontalen verdrehten Lage der beiden Leiterseile.

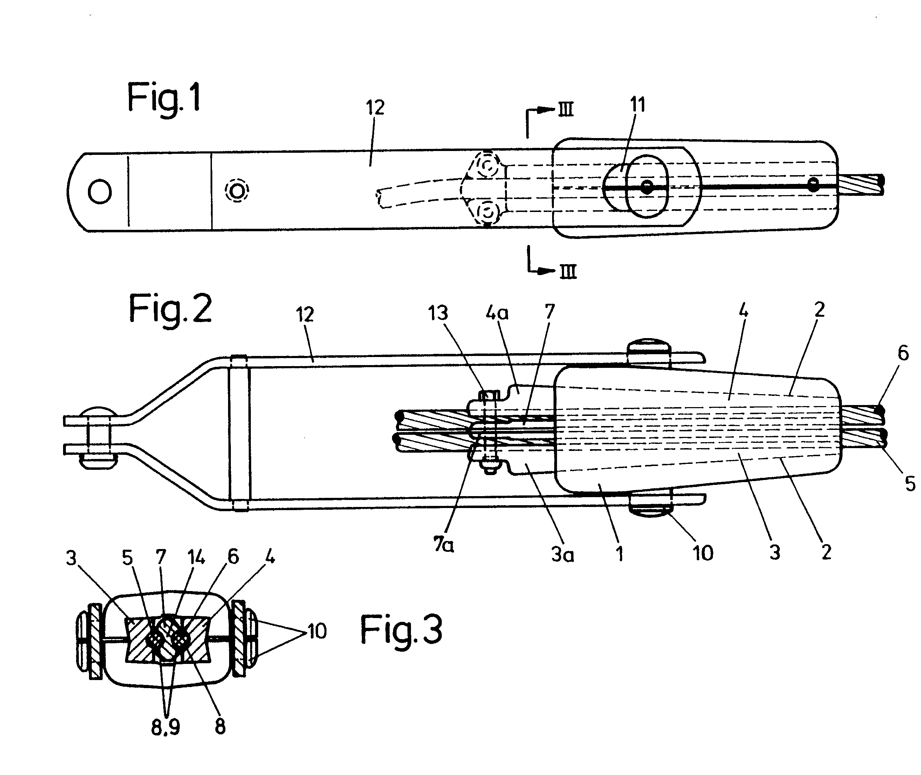

Die Abspannklemme gemäss den Fig. 1 bis 3 weist zwei einander gleiche Klemmkörperhälften 1 mit in Längsrichtung keilförmig verlaufenden Ausnehmungen 2 auf, in denen Keile 3, 4 zur Halterung zweier Einzel-Leiterseile 5 und 6 angeordnet sind, welche zusammengedrillt einen Leiter einer Freileitung bilden. Zwischen den beiden Leiterseilen 5 und 6 ist ein Zwischenteil 7 angeordnet.

Das Zwischenteil 7 weist beidseitig in Längsrichtung verlaufende, im Querschnitt teilkreisförmig ausgebildete Vertiefungen 8 auf, welche die Anlageflächen 9 für die Leiterseile 5 und 6 bilden.

Auch die beiden Keile 3 und 4 weisen entsprechende Vertiefungen 8 auf, wodurch die beiden Leiterseile 5 und 6 in fixierter Lage mit dem Klemmkörper 1 verspannt werden.

Durch die Anordnung der Leiterseile 5 und 6 beidseits des Zwischenteiles 7 ist eine gleichmässige Klemmkraft auf beide Leiterseile gewährleistet, auch wenn diese durch Herstellungstoleranzen im Durchmesser nicht genau gleich gross sind. Zwischen den Vertiefungen 8 des Zwischenteiles 7 ist ein Steg 14 mit im Verhältnis zum Leiterseil-Durchmesser geringerer Dicke angeordnet. Hierdurch wird eine kompakte Bauweise erreicht. Die Anlageflächen 9 der Vertiefungen 8 an den Keilen 3, 4 und dem Zwischenteil 7 sind in Längsrichtung alle zueinander parallel angeordnet.

Jede Klemmkörperhälfte 1 besitzt gegenüberliegend zwei Halbzapfen 10, wobei diese in Löchern 11 der Lasche 12 paarweise einen annähernd runden Zapfen bilden. Durch die Laschen 12 wird die Zugkraft der Leiterseile 5 und 6 an einem Mast oder an einer anderen fest verankerten Stelle aufgenommen.

Die aus den beiden Klemmkörperhälften 1 herausragenden Enden 3a und 4a der beiden Keile 3 und 4 bilden die Backen einer Zusatzklemme. Zum Verbinden der beiden Backen 3a und 4a sind in bekannter Weise Schrauben 13 vorgesehen.

Diese Schrauben 13 durchdringen ebenfalls das als Flansch ausgebildete Ende 7a des Zwischenteils 7. Dadurch wird das Zwischenteil 7 bezüglich der Keile 3 und 4 in einer bestimmten zueinander gemeinsamen Lage gehalten. Relativverschiebungen zwischen den Keilen 3 und 4 und dem Zwischenteil 7 sind ausgeschlossen und eine gleichmässige Haltekraft der Leiterseile gewährleistet.

Die Radiusmittelachsen der teilkreisförmigen Vertiefungen 8, bzw. die Längsachsen der eingelegten Leiterseile 5 und 6 liegen vorzugsweise in einer durch die Achsen der Zapfen 10 gehenden Ebene, wodurch eine gleichmässige Beanspruchung der Klemmkörperhälften und eine kippfreie Uebertragung der Kräfte auf die Laschen erreicht wird.

Eine Montageerleichterung ist dadurch gegeben, dass die Fixierung und das Zusammenhalten der beiden Klemmkörperhälften durch die Laschen schon vor dem Einführen der Keile und des Zwischenteiles mit den Leiterseilen in den Klemmkörper erfolgt.

Die beschriebene Seilabspannklemme ist für das Abspannen von aus zwei verdrillten Einzel-Leiterseilen hergestellten Freileitungen bestimmt, welche zur Vermeidung von Galopping bei Hochspannungsleitungen verwendet werden. Werden zwei oder mehr Zwischenteile 7 zwischen den Keilen 3, 4 angeordnet, können auch drei oder mehr Einzel-Leiterseile mit jeweils gleicher Spannkraft abgespannt werden.

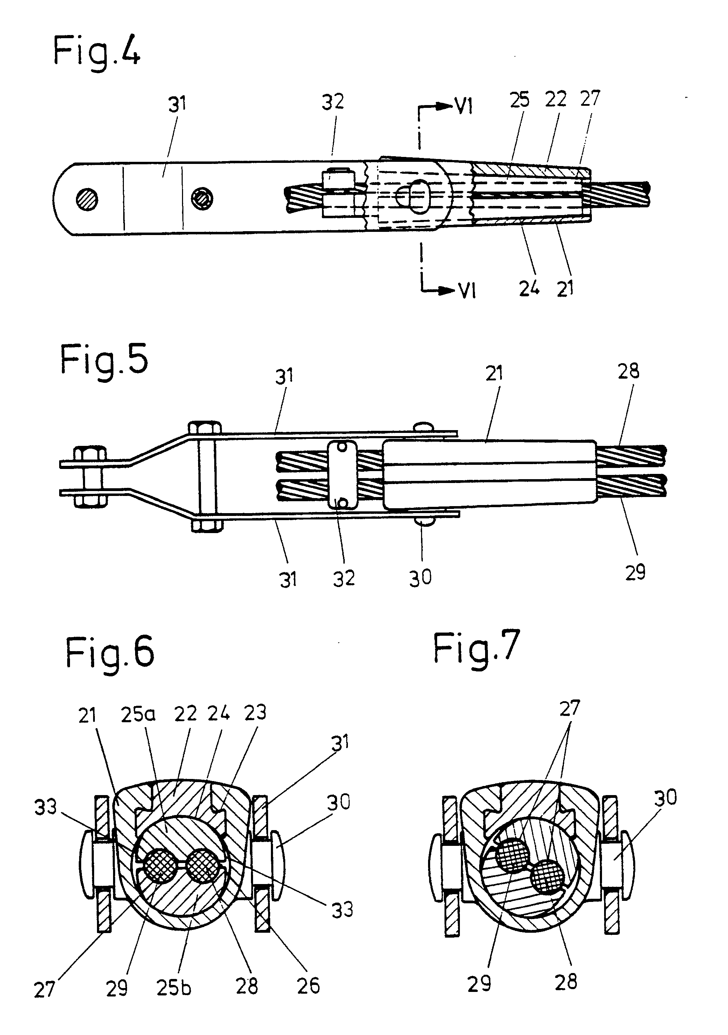

Die Seilabspannklemme gemäss den Fig. 4 bis 7 weist einen Klemmkörper 21 auf, welcher auf der Oberseite eine durch einen Deckel 22 verschlossene Oeffnung aufweist (siehe Fig. 6). Der Deckel 22 sitzt in schwalbenschwanzförmigen Führungen 23 und hält den Klemmkörper 21 zusammen. Die Innenkontur vom Klemmkörper 21 und Deckel 22 bilden zusammen eine konische im Querschnitt kreisrunde Bohrung 24, in welcher eine aus zwei Hälften 25a, 25b bestehende, konische Hülse 25 eingeschoben ist. Diese Hülse weist in ihrer Trennebene 26 zwei nebeneinander angeordnete halbkreisförmig ausgebildete Ausnehmungen 27 zur Aufnahme je eines Einzel-Leiterseiles 28 und 29 auf, welche ausserhalb dem Bereich der Seilabspannklemme miteinander verdrillt einen elektrischen Leiter einer Freileitung bilden.

Die Klemmkraft wird durch den Zug der Leiterseile 28 und 29 erzeugt, wodurch die konische Hülse 25 in der konischen Bohrung 24 des Klemmkörpers 21 nach vorne gezogen und dadurch gegen die Leiterseile 28 und 29 gepresst wird. Durch an Zapfen 30 des Klemmkörpers 21 eingehängte Laschen 31 wird die Zugkraft der Seile von einem Mast oder dergleichen aufgenommen. Eine der Hälften 25b der Hülse 25 ist über dem Bereich des Klemmkörpers 21 nach hinten verlängert, wobei an deren Ende eine mit Schrauben befestigte Bride 32 zum Festklemmen der beiden Leiterseile 28, 29 angeordnet ist.

Die Hülse 25 ist beidseits den Ausnehmungen 27 mit geraden, elliptischen oder bogenförmigen Abflachungen 33 versehen, wodurch nach aussen gerichtete Deformierungen im Bereich der Trennebene sich nicht nachteilig auf die Klemmwirkung der Hülse auswirken können.

Durch Verdrehen der konischen Hülse 25 um ihre Längsachse in der Bohrung 24 kann die Lage der Ausnehmungen 27 an die Windungslage der beiden Leiterseile 28 und 29 im Einspannbereich angepasst werden. Die Fig. 6 und 7 zeigen zwei der möglichen Stellungen, wobei eine feste Klemmung der Leiterseile 28, 29 in jeder Winkelstellung gewährleistet ist, was besonders vorteilhaft für die Verwendung der erfindungsgemässen Seilabspannklemme für die aus zwei oder mehreren verdrillten Leiterseilen bestehenden Leitungen ist.

## Patentansprüche

1. Seilabspannklemme für elektrische Freileitungen mit einem längsgeteilten, an einem Laschenpaar (12) mittels zweier Zapfen (10) eingehängten Klemmkörper (1), wobei die Trennebene der Klemmkörperhälften (1) durch die Achsen der beiden Zapfen (10) verläuft und mit zwei Keilen (3,4), mittels welchen eine Seilklemmkraft in Richtung der Achsen der Zapfen (10) erzeugbar ist, dadurch gekennzeichnet, dass zwischen den beiden Keilen (3,4) mindestens ein Zwischenteil (7) angeordnet ist, welches beidseitig Anlageflächen (9) für mindestens je ein Leiterseil (5,6) aufweist, dass die Anlageflächen (9) für die Leiterseile am Zwischenteil (7) und/oder an den Heilen (3,4) im Querschnitt als teilkreisförmige Vertiefungen (8) ausgebildet sind, wobei die Radiusmittelachse der teilkreisförmigen Vertiefungen (8) in einer durch die Achsen der Zapfen (10) gehenden Ebene liegen, und dass das Zwischenteil (7) bezüglich der Heile (3,4) in einer bestimmten zueinander gemeinsamen Lage gehalten ist.

2. Seilabspannklemme für elektrische Freileitungen, mit einer konischen Hülse (25), welche in Längsrichtung durch eine oder mehrere Trennebenen geteilt ist und in einem Klemmkörper (21) mit konischer Bohrung (24) eingeschoben ist, wobei das mit seitlich angeordneten Aufhängezapfen (30) versehene und nach oben offene Gehäuse (21) durch einen mit schwalbenschwanzförmigen Führungen (23) versehenen Deckel (22) abgeschlossen und zusammengehalten ist, dadurch gekennzeichnet, dass die zwei- oder mehrteilige Hülse (25) in der Trennebene (26) nebeneinander angeordnete Ausnehmungen (27) zur Anordnung zweier oder mehrerer Einzel-Seilleiter (28,29) aufweist.

3. Seilabspannklemme nach Anspruch 2, dadurch gekennzeichnet, dass die Ausnehmungen (27) annähernd halbkreisförmig ausgebildet sind.

4. Seilabspannklemme nach einem der Ansprüche 2 oder 3, dadurch gekennzeichnet, dass die im Querschnitt runde, konische Hülse (25) seitlich der Ausnehmungen (27) mit geraden, elliptischen oder bogenförmigen Abflachungen (33) versehen ist.

5. Seilabspannklemme nach einem der Ansprüche 2,3 oder 4, dadurch gekennzeichnet, dass die konische Hülse (25) mit ihrer Trennebene (26) in einer beliebigen Winkellage zu den Aufhängezapfen (20) zwecks Anpassung an die ausserhalb der Abspannklemme miteinander verdrillten Leiterseile (23,29) im Klemmkörper (21) festklemmbar ist.

**Claims**

1. Cable-anchoring clamp for electrical open lines having a longitudinally divided clamping body (1) suspended on a pair of brackets (12) by means of two pins (10), the parting plane of the halves (1) of the clamping body extending through the axes of the two pins (10) and having two wedges (3, 4) by means of which a cable clamping force can be produced in the direction of the axes of the pins (10), characterised in that between the two wedges (3, 4) at least one intermediate part (7) is arranged which has support surfaces (9) on both sides for at least one conductor cable (5, 6), in that the support surfaces (9) for the conductor cables on the intermediate part (7) and/or on the wedges (3, 4) are constructed as arcuate depressions (8) in cross-section, the radially central axis of the arcuate depressions (8) lying in a plane passing through the axes of the pins (10), and in that with respect to the wedges (3, 4) the intermediate part (7) is held in a specific position common to both.

2. Cable-anchoring clamp for electrical open lines, having a conical sleeve (25) which is divided in the longitudinal direction by one or more parting planes and is pushed in a clamping body (21) with a conical bore (24), the housing (21), provided with laterally arranged suspension pins (30) and open at the top, being closed and held together by a bracket (22) provided with swallowtail-shaped guideways (23), characterised in that in the parting plane (26) the two- or multi-part sleeve (25) has adjacently arranged recesses (27) for the arrangement of two or more individual cable conductors (28, 29).

3. Cable-anchoring clamp according to claim 2, characterised in that the recesses (27) are of approximately semi-circular construction.

4. Cable-anchoring clamp according to one of claims 2 or 3, characterised in that the conical sleeve (25), round in cross section, is provided laterally of the recesses (27) with straight, elliptical or arcuate flattened portions (33).

5. Cable-anchoring clamp according to one of claims 2, 3 or 4, characterised in that the conical sleeve (25) can be fixedly clamped in the clamping body (21) with its parting plane (26) in any angular position with respect to the suspension pins (20) for the purpose of adapting it to the conductor cables (23, 29) twisted together outside the anchoring clamp.

**Revendications**

1. Pince pour haubaner ou ancrer des câbles pour des lignes électriques aériennes, munie d'un corps de pince (1) divisé dans le sens de la longueur et suspendu à deux pattes (12) à l'aide de deux tourillons (10), le plan de séparation des demi-corps de pince (1) passant par les axes des deux tourillons (10), la pince étant munie de deux clavettes (3, 4) à l'aide desquelles on peut engendrer une force de pincement de câble dans la direction des axes des tourillons (10), caractérisée en ce qu'au moins une pièce intermédiaire (7) est disposée entre les deux clavettes (3, 4), cette pièce intermédiaire comportant des deux côtés des surfaces d'appui (9) pour au moins chaque fois un câble conducteur (5, 6), en ce que les surfaces d'appui (9) pour les câbles conducteurs sont conformées, en section, sur la partie intermédiaire (7) et/ou sur les clavettes (3, 4), comme des creusures (8) en forme de partie de cercle, l'axe moyen passant par les rayons des creusures (8) en forme de partie de cercle étant situé sur un plan passant par les axes des tourillons (10), et en ce que la pièce intermédiaire (7) est maintenue, à l'égard des clavettes (3, 4), dans une position réciproque déterminée.

2. Pince pour haubaner ou ancrer des câbles pour des lignes électriques aériennes comprenant un manchon conique (25) qui est divisé, dans le sens de la longueur, en un ou plusieurs plans de séparation et est inséré dans un corps de pince (21) à alésage conique (24), le boîtier (21) ouvert vers le haut et muni de tourillons de suspension (30) disposés latéralement étant fermé et maintenu assemblé par un couvercle (22) muni de guidages en forme de queue d'aronde, caractérisée en ce que le manchon (25) en au moins deux parties comporte, dans le plan de séparation (26), des parties en creux (27) disposées l'une à côté de l'autre et destinées à recevoir au moins deux conducteurs unitaires en forme de câble (28, 29).

3. Pince pour haubaner ou ancrer des câbles selon la revendication 2, caractérisée en ce que les parties en creux (27) présentent une forme sensiblement semi-circulaire.

4. Pince pour haubaner ou ancrer des câbles selon l'une des revendications 2 ou 3, caractérisé en ce que le manchon conique (25) à section ronde et conique est muni latéralement, par rapport aux parties en creux (27), de méplats (33) de forme droite, elliptique ou arquée.

5. Pince pour haubaner ou ancrer des câbles selon l'une des revendications 2, 3 ou 4, caractérisée en ce que le manchon conique (25) est susceptible d'être pincé fermement dans le corps de pince (21) avec son plan de séparation (26) placé dans une position angulaire déterminée par rapport au tourillon de suspension (20), pour s'adapter aux câbles conducteurs (28, 29) torsadés l'un par rapport à l'autre hors de la pince pour haubaner ou ancrer.

Fig.1

Fig.2

Fig.3

EP 0 212 643 B1

# Fig.4

# Fig.5

# Fig.6

# Fig.7